# DEMANDE DE BREVET EUROPEEN

(11) **EP 1 215 506 A1**
(43) Date de publication de la demande: **19.06.2002**
(21) Numéro de dépôt: 00204606.8
(22) Date de dépôt: 18.12.2000
(51) Int. Cl.: G01S 1/04

(54) **Récepteur de signaux radiofréquences avec des moyens de gestion des canaux à asservir**

(71) Demandeur: ASULAB S.A., CH-2501 Bienne (CH)
(72) Inventeur: Farine, Pierre-André, 2000 Neuchâtel (CH); Etienne, Jean-Daniel, 2206 Les Geneveys-sur-Coffrane (CH); Riem-Vis, Ruud, 2000 Neuchâtel (CH); Firouzi, Elham, 2514 Ligerz (CH)
(74) Mandataire: Laurent, Jean

(57) **Abrégé**

Le récepteur (1) de signaux radiofréquences comprend des moyens de réception (3) et de mise en forme desdits signaux radiofréquences en signaux intermédiaires (IF), un étage de corrélation (7) qui comprend plusieurs canaux de corrélation (7') pour recevoir les signaux intermédiaires (IF), des moyens à microprocesseur (12) en relation avec ledit étage de corrélation pour le transfert de signaux de commandes et/ou de données. Le récepteur comprend également des moyens de sélection des canaux, tels qu'un décodeur de priorité (13), reliés à tous les canaux (7') de l'étage de corrélation (7) et aux moyens à microprocesseur (12). Ces moyens de sélection permettent de placer en premier plan dans un canal virtuel, selon un ordre de priorité défini pour tous les canaux, le canal disposant de la plus haute priorité parmi le ou les canaux en fonction ayant émis chacun un signal d'interruption pour un transfert de données du canal sélectionné avec les moyens à microprocesseur (12).

## Description

L'invention concerne un récepteur de signaux radiofréquences comprenant des moyens de réception et de mise en forme desdits signaux radiofréquences en signaux intermédiaires, un étage de corrélation qui comprend plusieurs canaux de corrélation pour recevoir les signaux intermédiaires, des moyens à microprocesseur en relation avec ledit étage de corrélation pour le transfert de signaux de commandes et/ou de données.

Les récepteurs radiofréquences, en particulier du type GPS, comprennent en règle générale plusieurs canaux de corrélation reliés à un microprocesseur principal. Habituellement, le microprocesseur est destiné à s'occuper dans un mode de fonctionnement normal de toutes les tâches de synchronisation des canaux pour l'acquisition et la poursuite d'au moins quatre satellites visibles. Une fois que certains canaux se sont verrouillés sur un satellite respectif, des données GPS démodulées sont transmises au microprocesseur pour le calcul de la position en X, Y et Z du récepteur, ainsi que de la vitesse et/ou du temps.

Pendant toutes les procédures de recherche et de poursuite de satellites, les canaux en fonction émettent des signaux d'interruption à destination du microprocesseur pour l'avertir de données qu'il peut prélever. Dès qu'il reçoit des signaux d'interruption, le microprocesseur doit parcourir tous les canaux pour savoir de quel canal proviennent les données à prélever. Ces données peuvent concerner par exemple des paramètres de configuration, des messages GPS, l'état du code pseudo-aléatoire PRN, l'incrément de fréquence relatif à l'effet Doppler, des pseudo-distances, des modes de coupure des moyens de réception, l'état d'intégrateurs compteurs et d'autres informations.

Le fait que le microprocesseur doive parcourir tous ces canaux, afin de savoir de quels canaux proviennent les signaux d'interruption pendant ces opérations de recherche et de poursuite, représente une perte importante de temps ce qui est un inconvénient. Cette perte de temps conduit d'une part le microprocesseur à ne fournir les données de position, de vitesse et/ou de temps calculés qu'après une longue période de fonctionnement, et d'autre part à une forte consommation en énergie du récepteur. La consommation doit bien évidemment être économisée s'il est souhaité monter le récepteur GPS dans un dispositif portable, tel qu'une montre ou un téléphone portable, car le dispositif dans ce cas est alimenté par une batterie ou un accumulateur à faible consommation.

Un but que se propose de résoudre l'objet de l'invention consiste à réaliser un récepteur de signaux radiofréquences disposant de moyens permettant à un microprocesseur d'accéder rapidement à un canal qui a émis un signal d'interruption pour un transfert de données en palliant les inconvénients susmentionnés.

Ce but, ainsi que d'autres sont atteints par le récepteur de signaux radiofréquences cité ci-devant qui se caractérise en ce qu'il comprend des moyens de sélection des canaux reliés à tous les canaux de l'étage de corrélation et aux moyens à microprocesseur, lesdits moyens de sélection permettant de placer en premier plan dans un canal virtuel, selon un ordre de priorité défini pour tous les canaux, le canal disposant de la plus haute priorité parmi le ou les canaux en fonction ayant émis chacun un signal d'interruption pour un transfert de données du canal sélectionné avec les moyens à microprocesseur.

Grâce à ces moyens de sélection, tels qu'un décodeur de priorité, le microprocesseur des moyens à microprocesseur pourra accéder, lors de la réception d'un signal d'interruption, directement à un des canaux sélectionné qui a la plus haute priorité sans devoir parcourir tous les canaux. L'accès direct au canal prioritaire émetteur d'un signal d'interruption permet également une réduction en consommation en énergie. Ceci procure un avantage dans le cas où le récepteur GPS est monté dans un dispositif disposant d'une batterie ou d'un accumulateur à faible consommation, tel qu'une montre ou un téléphone portable.

Pour se trouver dans cette situation, le microprocesseur doit adresser le canal virtuel. Avec cela, le décodeur de priorité va sélectionner, lors d'interruptions survenues de plusieurs canaux, le canal qui a la plus haute priorité pour le présenter en premier plan au microprocesseur. En fonction de la cause de l'interruption du canal sélectionné qui est communiquée au microprocesseur, les moyens à microprocesseur génèrent des adresses pour accéder aux registres correspondants du canal sélectionné. Une fois que les données des registres adressés du canal sélectionné ont été lues, une confirmation de lecture est transmise au canal sélectionné supprimant l'interruption du canal. Après cela, la prochaine interruption du même canal ou d'un autre canal peut être sélectionnée à travers le canal virtuel tout en gardant l'ordre de priorité entre les canaux.

L'utilisation du canal virtuel du décodeur de priorité est essentielle pendant toutes les tâches urgentes de synchronisation pour l'acquisition et la poursuite de satellites visibles par les canaux de corrélation. Dans une phase initiale, les moyens à microprocesseur ont le temps de transférer des paramètres de configuration pour chaque canal, ce qui fait que l'emploi du canal virtuel n'est pas nécessaire.

Les buts, avantages et caractéristiques du récepteur de signaux radiofréquences apparaîtront mieux dans la description suivante de formes d'exécution illustrées par les dessins sur lesquels :
- la figure 1 représente schématiquement un récepteur de signaux radiofréquences comprenant un décodeur de priorité selon l'invention, et
- la figure 2 représente schématiquement les éléments électroniques du décodeur de priorité selon l'invention.

La description suivante sera faite en relation à un récepteur de signaux radiofréquences de type GPS. Plusieurs parties de ce récepteur ne seront pas expliquées en détail car elles font partie des connaissances générales d'un homme du métier dans ce domaine technique.

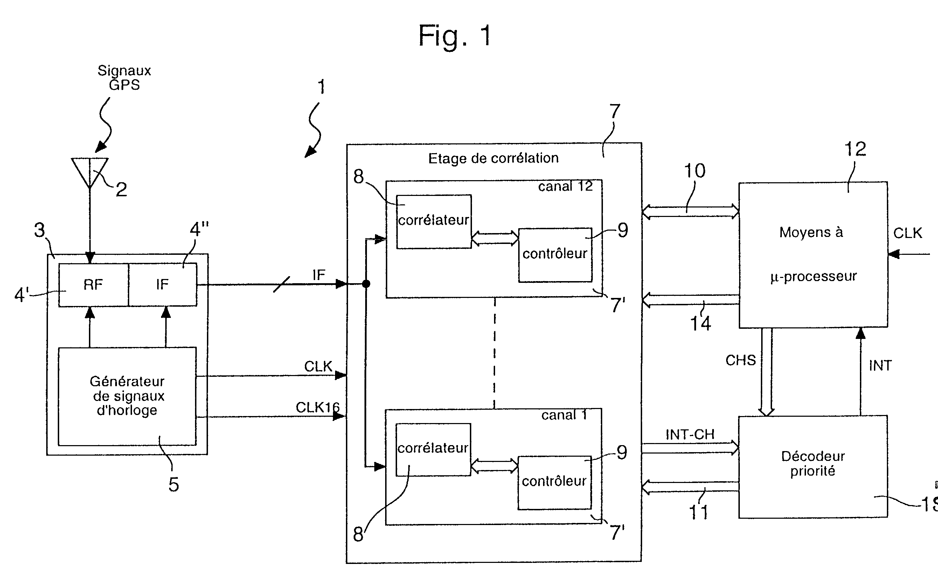

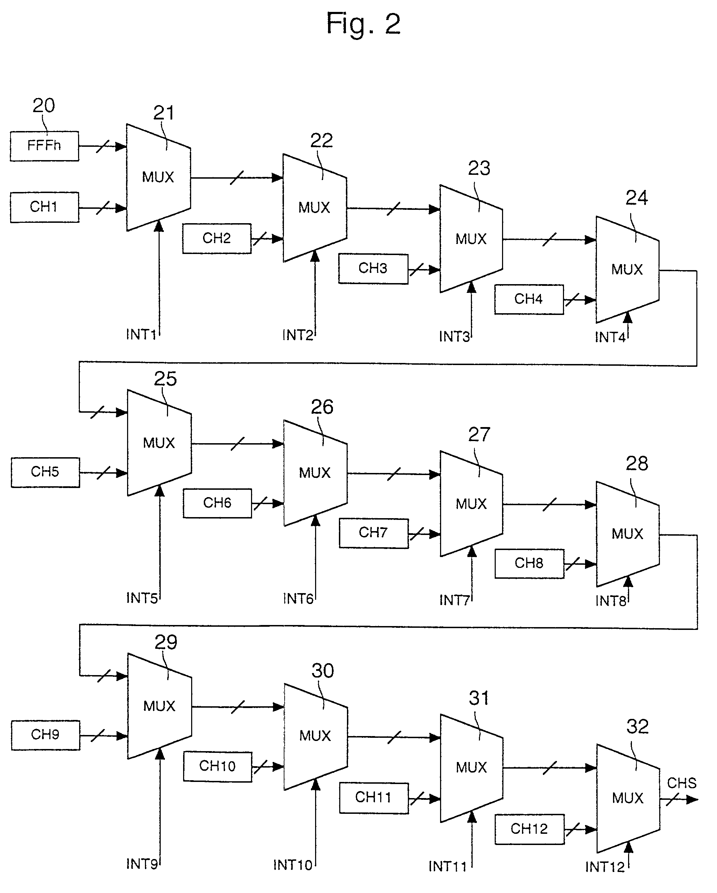

Le récepteur de signaux radiofréquences de type GPS est représenté schématiquement à la figure 1. Il se compose d'une antenne 2 pour recevoir des signaux radiofréquences GPS provenant de plusieurs satellites, de moyens de réception et de mise en forme 3 des signaux radiofréquences en signaux intermédiaires IF, d'un étage de corrélation 7 à plusieurs canaux de corrélation 7' recevant les signaux intermédiaires IF par exemple à une fréquence de l'ordre de 400 kHz, des moyens à microprocesseur 12 et des moyens de sélection des canaux 7', tels qu'un décodeur de priorité 13. Les éléments du décodeur de priorité 13 seront expliqués en référence à la figure 2.

Conventionnellement dans les moyens de réception 3, un premier circuit électronique 4' convertit tout d'abord les signaux radiofréquences de fréquence 1,57542 GHz en une fréquence par exemple de 179 MHz. Un second circuit électronique IF 4" procède à une double conversion pour amener les signaux GPS tout d'abord à une fréquence de 4,76 MHz puis finalement à une fréquence par exemple de 400 kHz en échantillonnant à 4,36 MHz. Des signaux intermédiaires complexes IF échantillonnés et quantifiés à fréquence de l'ordre de 400 kHz sont ainsi fournis aux canaux 7' de l'étage de corrélation 7.

Les signaux intermédiaires complexes IF sont composés d'un signal en phase et d'un signal en quadrature représentés sur la figure par une ligne en gras coupée d'une barre oblique définissant 2 bits. Toutefois selon d'autres modes de réalisation non représentés, les signaux intermédiaires IF pourraient être fournis sur 4 bits ou plus, ou ne comporter qu'un signal en phase fourni sur 1 bit.

Pour les opérations de conversion de fréquence, un générateur de signaux d'horloge 5 fait partie des moyens de réception et de mise en forme des signaux radiofréquences 3. Ce générateur est muni par exemple d'un oscillateur à quartz non représenté calibré à une fréquence de l'ordre de 17,6 MHz. Deux signaux d'horloge CLK et CLK16 sont fournis notamment à l'étage de corrélation 7 et aux moyens à microprocesseur 12 pour cadencer toutes les opérations de ces éléments. La première fréquence d'horloge CLK peut valoir 4,36 MHz, tandis que la seconde fréquence d'horloge peut être fixée 16 fois inférieure, c'est-à-dire à 272,5 kHz utilisée pour une grande partie de l'étage de corrélation afin de gagner en consommation d'énergie.

L'étage de corrélation 7 est constitué de 12 canaux de corrélation 7' qui comprennent chacun un corrélateur 8 et un contrôleur 9 destiné à mettre en fonction par un matériel dédicacé notamment un algorithme de traitement des signaux pour l'acquisition et la poursuite d'un satellite détecté par le canal.

Le corrélateur 8 de chaque canal de corrélation 7' comprend un mélangeur de porteuse, un mélangeur de code, des intégrateurs compteurs, des discriminateurs de code et de porteuse, des oscillateurs à commande numérique du code et de la porteuse, un générateur de code pseudo-aléatoire, et une table sin/cos de la porteuse. Par mesure de simplification, tous ces éléments n'ont pas été représentés sur la figure 1 car ils font partie des connaissances générales d'un homme du métier dans ce domaine technique. Le lecteur peut se référer pour plus détails à l'enseignement tiré du livre « Understanding GPS Principles and Applications » au chapitre 5 rédigé par Phillip Ward et de l'éditeur Elliott D. Kaplan (Artech House Publishers, USA 1996) au numéro d'édition ISBN 0-89006-793-7, et notamment aux figures 5.8 et 5.13 représentant en grandes lignes les éléments cités ci-dessus.

L'agencement des contrôleurs 9 dans chaque canal a l'avantage d'éviter de devoir faire trop de transferts de données pendant ces phases d'acquisition et de poursuite entre tous les canaux mis en fonction et les moyens à microprocesseur 12. Si toutes les tâches de synchronisation de tous les canaux étaient réalisées en collaboration avec un microprocesseur unique, la consommation en énergie du récepteur deviendrait importante.

Comme toutes ces tâches de synchronisation sont avantageusement réalisées par la combinaison du corrélateur 8 et du contrôleur 9 dans chaque canal, il n'est pas nécessaire d'avoir un microprocesseur de grande taille dans les moyens à microprocesseur 12. Un microprocesseur 8-bit peut suffire pour le calcul de la position en X, Y et Z, de la vitesse et/ou du temps. Ce microprocesseur peut être par exemple un microprocesseur 8-bit CooIRISC-816 de EM Microelectronic-Marin SA en Suisse.

Les moyens à microprocesseur 12 comprennent également des moyens de mémorisation, ainsi qu'un décodeur d'adresses non représentés sur la figure 1. Les moyens de mémorisation comprennent des données relatives à chaque satellite placé en orbite et des données de paramètres de fréquence porteuse et de code pseudo-aléatoire de chaque satellite. Pour pouvoir tirer les données d'un ou plusieurs registres d'un canal sélectionné, le décodeur d'adresses envoie par un bus dédicacé 14 des signaux d'adresses pour sélectionner le ou les registres à lire.

Dans l'étage de corrélation 7 pour chaque canal 7', plusieurs registres tampons d'entrée et de sortie de données et/ou de paramètres de configuration sont prévus, mais ne sont pas représentés de manière à ne pas surcharger la figure 1. Les données placées dans les registres concernent notamment les messages GPS, l'état du code PRN, l'incrément de fréquence relatif à l'effet Doppler, les pseudo-distances et autres données. Un bus de transfert des données et/ou des paramètres 10 relie les moyens à microprocesseur aux registres des canaux respectifs. Par ce bus 10, des signaux de commandes des moyens à microprocesseur 12 peuvent aussi être transmis aux canaux de corrélation 7' notamment pour leur mise en fonction.

Il est à noter que ces registres peuvent accumuler des données pendant les procédures de recherche et de poursuite des canaux sans forcément être transférées automatiquement aux moyens à microprocesseur 12. Toutefois, lorsqu'au moins un signal d'interruption est parvenu aux dits moyens à microprocesseur, une lecture d'au moins un registre d'un canal sélectionné doit être opérée.

Les moyens à microprocesseur 12 transmettent donc par le bus 10 avant les procédures de recherche et de poursuite des paramètres relatifs au code pseudo-aléatoire à chercher, et à la fréquence porteuse des signaux intermédiaires. Ces paramètres sont transmis pour configurer de manière individuelle tous les canaux 7' avant le lancement des procédures de recherche et de poursuite proprement dites.

Pour atteindre chaque canal, les moyens à microprocesseur 12 commandent un décodeur de priorité configurable. Pour ce faire, ils envoient un numéro de canal déterminé par le bus CHS au décodeur de priorité 13. Comme l'étage de corrélation a 12 canaux, le mot binaire du numéro du canal comporte 4 bits. Le décodeur 13 configuré va ainsi envoyer par le bus 11 des signaux de sélection du canal désiré par les moyens à microprocesseur 12. Pour ce transfert préliminaire de paramètres de configuration, le microprocesseur peut prendre le temps de le faire.

Par contre quand les procédures de recherche et de poursuite des satellites sont lancées pour les canaux 7', il est nécessaire d'avoir accès rapidement à toutes les données signalées et stockées dans les registres. Dans ce cas, les moyens à microprocesseur 12 envoient le numéro d'un canal virtuel, choisi comme étant le numéro 15, au décodeur de priorité 13. Dans cette configuration du décodeur de priorité, le canal qui a par exemple le numéro d'identification le plus élevé est prioritaire par rapport aux autres canaux de rang inférieur lors de plusieurs signaux d'interruptions des canaux qui sont envoyés par le bus INT-CH au décodeur de priorité 13.

Il suffit d'au moins une interruption qui serait survenue dans un canal pour que le décodeur le signale aux moyens à microprocesseur 12 en lui envoyant une commande d'interruption INT. Dès cet instant, le canal qui a généré cette interruption va être sélectionné par le décodeur de priorité 13 pour le mettre en premier plan.

Un registre d'état de l'étage de corrélation stocke les données concernant notamment les causes de l'interruption. Ce message de données est composé normalement de 8 bits avec 1 bit de données GPS, 3 bits de causes d'interruption et 4 bits du numéro du canal émetteur du signal d'interruption. A la réception de la commande d'interruption, le message stocké dans le registre d'état est lu par le microprocesseur qui va activer ainsi le décodeur d'adresses pour qu'il envoie par le bus 14 des signaux d'adresses au canal sélectionné. Les adresses envoyées vont permettre au microprocesseur de lire les données de certains registres du canal sélectionné en fonction de la cause d'interruption.

Une fois que les données ont été lues par le microprocesseur, celui-ci transmet en retour dans le même registre lu une valeur de confirmation de lecture. Dès cet instant, la commande d'interruption est annulée, et une nouvelle commande d'interruption du même canal ou d'un autre canal peut être envoyée.

A titre informatif, le tableau ci-dessous représente les causes d'interruption, stockées dans les registres des canaux, qui peuvent survenir lors des procédures de recherche et de poursuite des canaux en fonction :

| **Cause d'interruption** | **Valeur des bits** |
|---|---|
| Pas d'interruption | 0 0 0 |
| Nouvelle donnée GPS disponible | 0 0 1 |
| Recherche du satellite faite | 0 1 0 |
| Coupure commencée | 0 1 1 |
| Nouvelle pseudo-distance stockée | 1 0 0 |
| Perte de synchronisation de bits | 1 0 1 |
| Mode de poursuite commencé | 1 1 0 |
| Valeur de sortie intégrateur apparue | 1 1 1 |

Il se peut que pendant les phases de recherche et de poursuite de satellites par les canaux de corrélation en fonction, plusieurs signaux d'interruption apparaissent en même temps signalant au microprocesseur que certaines données peuvent être prélevées des canaux qui ont émis ces interruptions. Pour ce faire, le décodeur de priorité 13 configuré avec le canal virtuel permet de sélectionner et de placer en premier plan le canal qui a le numéro d'identification le plus haut parmi les canaux émetteurs de signaux d'interruption.

Toutes les interruptions des canaux sont donc traitées par les moyens à microprocesseur dans l'ordre d'apparition de ces interruptions et en fonction de l'ordre de priorité imposé aux canaux. Il se peut que plusieurs causes d'interruption stockées dans un des canaux soient traitées les unes à la suite des autres avant qu'un autre canal devienne prioritaire.

La priorité d'un canal sera examinée après que le traitement du canal précédent soit terminé. Avec cet ordre imposé par le décodeur de priorité, les moyens à microprocesseur peuvent accéder directement au canal placé volontairement en premier plan dans le canal virtuel sans devoir tous les parcourir.

L'étage de corrélation 7, les moyens à microprocesseur 12 et le décodeur de priorité 13 peuvent être réalisés sur un même substrat semi-conducteur, par exemple en silicium. Un diviseur de fréquence d'horloge du générateur de signaux d'horloge 5 pourrait aussi faire partie de l'étage de corrélation pour la production du ou des signaux d'horloge CLK et CLK16.

La figure 2 montre les éléments électroniques du décodeur de priorité utilisé pour pouvoir placer le canal prioritaire en premier plan dans un canal virtuel lors d'interruptions survenues.

Le décodeur de priorité comprend un nombre de multiplexeurs 21 à 32 placés les uns à la suite des autres dont la sortie de l'un est reliée à une entrée de l'autre dans un ordre chronologique. Ce nombre de multiplexeurs correspond au nombre de canaux de l'étage de corrélation. L'autre entrée de chaque multiplexeur 21 à 32 reçoit le numéro d'identification CH1 à CH12 du canal correspondant. Chaque multiplexeur est commandé par un signal de commande d'interruption INT1 à INT12 spécifique provenant du canal émetteur de l'interruption. Dans la configuration représentée, le premier multiplexeur 21 est commandé par un signal de commande INT1 provenant du premier canal, alors que le deuxième multiplexeur 22 est commandé par un signal de commande INT2 provenant du second canal, et ainsi de suite jusqu'au dernier multiplexeur 32 commandé par le signal de commande d'interruption INT12 provenant du douzième canal.

La sortie du dernier multiplexeur 32 fournit les signaux de sélection du canal prioritaire à mettre en premier plan en fonction des signaux d'interruption INT1 à INT12 pour autant que le microprocesseur ait envoyé au décodeur le numéro du canal virtuel. Normalement, le microprocesseur envoie le numéro du canal virtuel, dès qu'il a reçu une commande d'interruption, car c'est dès la réception de cette commande qu'il est nécessaire de mettre en premier plan dans le canal virtuel un canal prioritaire émetteur de l'interruption.

Selon que le signal de commande d'interruption INT1 à INT12 est à l'état haut ou à l'état bas, la sortie de chaque multiplexeur commandé par ce signal fournira soit le numéro du canal d'identification, soit la valeur de sortie du précédent multiplexeur. Le premier multiplexeur 21 reçoit, quant à lui, à une entrée 20 une valeur binaire qui peut être constituée de tous des 1, ce qui définirait le numéro du canal virtuel si aucune interruption ne survient. Il se peut également qu'à cette entrée le numéro d'un canal spécifique fourni par le microprocesseur soit introduit pour la sélection d'un canal particulier.

Dans le cas présent, lorsque le signal de commande d'interruption INT1 à INT12 est à l'état haut ou bas, c'est-à-dire à 1 ou à 0, c'est la valeur de sortie du précédent multiplexeur qui est entré au multiplexeur suivant, alors que si ce signal est à l'état bas ou haut, c'est le numéro d'identification d'un canal du multiplexeur correspondant qui est fourni en sortie.

Si, par exemple, deux signaux de commande d'interruption INT3 et INT6 sont fournis par les canaux CH3 et CH6, le multiplexeur 23 va sortir le numéro d'identification du troisième canal qui va passer par les multiplexeurs 24 et 25 pour se présenter à l'entrée du multiplexeur 26. Par contre dans le multiplexeur 26 commandé par le signal d'interruption INT6, c'est le numéro d'identification du sixième canal qui va sortir à la place du numéro d'identification du troisième canal. Comme plus aucune autre commande d'interruption n'est fournie aux autres multiplexeurs suivants, le numéro d'identification du sixième canal va être fourni en sortie du dernier multiplexeur 32. Ceci va commander de mettre en premier plan le sixième canal qui a la priorité sur le troisième canal pour que les moyens à microprocesseur traite ce sixième canal avant le troisième canal.

L'ordre de priorité des canaux attribué par cet agencement du décodeur de priorité peut bien évidemment être modifié. La priorité des canaux lors d'interruptions doit conduire à placer automatiquement le canal à la plus haute priorité en premier plan dans l'étage de corrélation pour le présenter aux moyens à microprocesseur.

Bien entendu d'autres formes de réalisation du récepteur de signaux radiofréquences peuvent être encore imaginées à la connaissance de l'homme du métier sans sortir du cadre de l'invention définie par les revendications. Par exemple, le récepteur de signaux radiofréquences avec le décodeur de priorité pourrait être utilisé dans le domaine de la téléphonie pour autant qu'il soit nécessaire de disposer de plusieurs canaux de corrélation dans ledit récepteur.

## Revendications

1. Récepteur (1) de signaux radiofréquences comprenant des moyens de réception (3) et de mise en forme desdits signaux radiofréquences en signaux intermédiaires (IF), un étage de corrélation (7) qui comprend plusieurs canaux de corrélation (7') pour recevoir les signaux intermédiaires (IF), des moyens à microprocesseur (12) en relation avec ledit étage de corrélation pour le transfert de signaux de commandes et/ou de données, **caractérisé en ce qu'**il comprend des moyens de sélection des canaux (13) reliés à tous les canaux (7') de l'étage de corrélation (7) et aux moyens à microprocesseur (12), lesdits moyens de sélection permettant de placer en premier plan dans un canal virtuel, selon un ordre de priorité défini pour tous les canaux, le canal disposant de la plus haute priorité parmi le ou les canaux en fonction ayant émis chacun un signal d'interruption pour un transfert de données du canal sélectionné avec les moyens à microprocesseur (12).

2. Récepteur selon la revendication 1, **caractérisé en ce que** les moyens de sélection sont un décodeur de priorité (13) dans lequel chaque canal de corrélation est représenté par son numéro d'identification de manière à définir l'ordre de priorité en fonction de ce numéro d'identification, le canal disposant de la plus haute priorité étant celui dont le numéro d'identification déterminé est le plus élevé ou le plus bas parmi le ou les canaux en fonction ayant émis chacun un signal d'interruption pour un transfert de données du canal sélectionné avec les moyens à microprocesseur (12).

3. Récepteur selon l'une des revendications 1 et 2, **caractérisé en ce que** les moyens à microprocesseur (12) transmettent, après la lecture des données du canal sélectionné placé dans le canal virtuel, un signal de confirmation de lecture audit canal afin d'annuler l'interruption occasionnée par ce canal et sélectionner dans le canal virtuel le prochain canal à la plus haute priorité qui a émis un signal d'interruption.

4. Récepteur selon la revendication 2, **caractérisé en ce que** le décodeur de priorité (13) comprend un nombre de multiplexeurs (21 à 32) placés les uns à la suite des autres correspondant au nombre de canaux (7') à asservir, par exemple 12 canaux, la sortie de chaque multiplexeur étant reliée à une entrée d'un multiplexeur suivant excepté la sortie du dernier multiplexeur (32) destiné à sélectionner le canal à la plus haute priorité, chaque multiplexeur recevant à une autre entrée le numéro d'identification d'un canal respectif dans un ordre défini, un signal d'interruption (INT-CH) de chaque canal commandant le multiplexeur respectif pour transmettre à sa sortie le numéro d'identification du canal lorsqu'un signal d'interruption dudit canal est appliqué audit multiplexeur respectif.

5. Récepteur selon la revendication 1, **caractérisé en ce que** chaque canal de corrélation (7') comprend un corrélateur (8) recevant les signaux intermédiaires (IF), et un contrôleur (9) pour mettre en oeuvre un algorithme de traitement des signaux numériques dans toutes les tâches de synchronisation lors de la recherche et de la poursuite d'un satellite déterminé.

6. Récepteur selon la revendication 2, **caractérisé en ce que** l'étage de corrélation (7), les moyens à microprocesseur (12) et le décodeur de priorité (13) sont réalisés sur un même substrat semi-conducteur, par exemple en silicium.
